# EUROPÄISCHE PATENTSCHRIFT

(11) **EP 1 089 219 B1**
(45) Veröffentlichungstag und Bekanntmachung des Hinweises auf die Patenterteilung: **09.12.2009**
(21) Anmeldenummer: 00119493.5
(22) Anmeldetag: 18.09.2000
(51) Int. Cl.: G06K 19/073

(54) **Verfahren zur Sicherung eines Datenspeichers**
Method for protecting a data memory
Méthode de proteger une mémoire de donnée

(30) Priorität: 01.10.1999 DE 19947574
(43) Veröffentlichungstag der Anmeldung: 04.04.2001
(60) Teilanmeldung: 07013896.1
(73) Patentinhaber: Giesecke & Devrient GmbH, 81677 München (DE)
(72) Erfinder: Grassl, Thomas Dr., 85354 Freising (DE); Wirén, Arvid, 81927 München (DE); Straub, Walter, 82041 Oberhaching (DE)
(74) Vertreter: Klunker . Schmitt-Nilson . Hirsch

(56) Entgegenhaltungen:
- DE-A- 4 135 767
- US-A- 4 811 288
- US-A- 5 533 123
- CAMBOURAKIS G ET AL: "Black box for surface vehicles ARGOS analysis and software development" INDUSTRIAL ELECTRONICS, 1995. ISIE '95., PROCEEDINGS OF THE IEEE INTERNATIONAL SYMPOSIUM ON ATHENS, GREECE 10-14 JULY 1995, NEW YORK, NY, USA,IEEE, US, 10 July 1995 (1995-07-10), pages 564-568, XP010161445 ISBN: 0-7803-2683-0

## Beschreibung

Die vorliegende Erfindung betrifft ein Verfahren zur Sicherung eines Sicherheitsdatenspeichers sowie einen Sicherheitsprozessor mit einem solchen Sicherheitsdatenspeicher. Hierbei ist unter dem Begriff "Sicherheitsdatenspeicher" jeder Datenspeicher zu verstehen, der sicherheitsrelevante Daten enthält, die vor einem unbefugten Zugriff geschützt werden müssen.

Derartige Sicherheitsprozessoren mit Sicherheitsdatenspeichern befinden sich insbesondere in Chipkarten und Chipkarten-Terminals, die dazu dienen, eine datentechnische Verbindung zu einer Chipkarte herzustellen. Da auf den Chipkarten die sicherheitsrelevanten Daten codiert abgespeichert sind, muß der Sicherheitsprozessor im Besitz der richtigen Schlüssel sein, um die Daten der Chipkarte verarbeiten zu können. Diese Schlüssel sind in einem Sicherheitsdatenspeicher abgelegt. Um zu verhindern, daß Unbefugte in den Besitz dieser Schlüsseldaten gelangen und damit Mißbrauch betreiben können, sind spezielle Maßnahmen erforderlich.

Aus der Praxis ist bereits das EFTPOS-Terminal der Anmelderin bekannt. Bei diesem Terminal wird das gesamte Sicherheitsmodul mit dem Sicherheitsprozessor einschließlich Display, Tastatur und Meßköpfen als eine Einheit vergossen. Innerhalb der Vergußmasse befindet sich ein Lichtsensor. Sobald von diesem Lichtsensor ein Lichteinfall detektiert wird, werden automatisch vom Sicherheitsprozessor die im Sicherheitsdatenspeicher gespeicherten sicherheitsrelevanten Daten gelöscht. Ein unautorisierter Eingriff von außen würde das Terminal zwar funktionsuntüchtig machen, jedoch wäre ein Auslesen der sicherheitsrelevanten Daten nicht mehr möglich.

In der EP 0 408 456 B2 wird eine Chipkarte beschrieben, deren Mikroschaltung gegen Eingriffe durch mehrere Sensoren geschützt ist, welche einen sogenannten Vorzwangszustand aufweisen. Diese Sensoren reagieren auf mechanische Verformungen. Es sind mehrere Sensoren innerhalb der Chipkarte verteilt, um die gesamte Chipkarte auf Angriffe hin zu überwachen.

Aus US-A 5,533,123 ist ein Verfahren zur Sicherung eines Sicherheitsdatenspeichers zu entnehmen, bei dem eine äussere Einwirkung auf ein Bauteil, welches den Sicherheitsdatenspeicher enthält, von Sensoren detektiert wird, deren Signale in einen "Status Register 11", d.h einen flüchtigen Zwischenspeicher, abgelegt werden, wobei bei Signalieren eines Angriffs der Inhalt des Sicherheitsdatenspeichers gelöscht wird.

Diese bisher bekannten Sicherheitsmaßnahmen sind zwar zuverlässig, jedoch ist es bisher nicht möglich, nach dem Ansprechen eines Sensors, d.h. nach einem erfolgten Angriff, Informationen darüber zu erhalten, wie der Angriff erfolgt ist.

Es ist Aufgabe der vorliegenden Erfindung, ein Verfahren zur Sicherung eines Sicherheitsdatenspeichers bzw. einen Sicherheitsprozessor mit einem Sicherheitsdatenspeicher anzugeben, bei dem nach einem erfolgten Angriff Informationen über die Art und den Ort des Angriffs gewonnen werden können.

Diese Aufgabe wird durch ein Verfahren gemäß Anspruch 1 gelöst.

Durch die permanente Überwachung der Sensoren, wobei ständig die Zustandsdaten der Sensoren abgespeichert werden, wird ein Protokoll aufgezeichnet, anhand dessen nach einem Angriff nachvollzogen werden kann, wie sich die Zustände der einzelnen Sensoren vor dem signalisierten Angriff verändert haben.

Bei den Sensoren kann es sich hierbei um beliebige Sensoren handeln, die an den verschiedensten Orten unterschiedliche Parameter wie Temperatur, Druck, Licht, Radioaktivität, Röntgenstrahlen, Elektronenstrahlen oder dergleichen registrieren. Anhand dieses Protokolls können dann Aufschlüsse darüber gewonnen werden, auf welche Weise und in welchem räumlichen Bereich ein Angriff erfolgt ist. Diese Daten können zum einen dabei helfen, die Ursache des Angriffs zu klären. Zum anderen können sie bei der Fortentwicklung der Sicherheitstechnik nützlich sein.

Vorzugsweise werden die Zustandsdaten der Sensoren von der Datenaufzeichnungseinrichtung zyklisch in einem überschreibbaren Speicher abgelegt, das heißt, es wird nur jeweils eine bestimmte Anzahl von zeitlich zurückliegenden Datensätzen gespeichert.

Im Prinzip können die Zustandsdaten hierbei direkt in einen nichtflüchtigen Speicher abgelegt werden. Ebenso können die Zustandsdaten prinzipiell auch in einem flüchtigen Speicher abgelegt werden, dessen permanente Spannungsversorgung in jeder Situation sichergestellt ist.

Vorzugsweise erfolgt die zyklisch Abspeicherung der Zustandsdaten zunächst in einen flüchtigen Zwischenspeicher und die Daten werden dann bei Signalisieren eines Angriffs vom Zwischenspeicher in einen nichtflüchtigen Endspeicher übertragen. Zusätzlich werden vorteilhafterweise beim Signalisieren eines Angriffs die Zustandsdaten der Sensoren bzw. zumindest des einen Sensors, der den Angriff signalisiert, direkt in den Endspeicher abgelegt.

Bei einem besonders zeitlich ökonomischen Ausführungsbeispiel mit gleichzeitig geringem Speicherplatzbedarf werden die Zustandsdaten der Sensoren zur permanenten Protokollierung an einen Analog/ Digital-Wandler weitergeleitet, welcher die analogen Zustandsdaten zur Speicherung im flüchtigen Zwischenspeicher digital codiert. Erst beim Signalisieren eines Angriffs werden die Zustandsdaten der Sensoren bzw. des Sensors, der den Angriff signalisiert hat, direkt in dem Endspeicher abgespeichert, ohne zuvor den Analog/Digital-Wandler und den Zwischenspeicher zu durchlaufen.

Da damit gerechnet werden muß, daß ein Angriff erst nach einem Unterbrechen der Versorgungsspannung erfolgt, ist der Sicherheitsprozessor mit einem Batteriepuffer versehen. Unter Batterie ist in diesem Sinne selbstverständlich auch ein wiederaufladbarer Akkumulator zu verstehen. Mit dieser Batterie wird die Spannungsversorgung der Sensoren bzw. des Sicherheitsdatenspeichers bzw. der übrigen zur Durchführung des Verfahrens benötigten Bauteile, beispielsweise der Sensorauswerteeinrichtung und der Datenaufzeichnungseinrichtung, zumindest solange aufrechterhalten, bis die sicherheitsrelevanten Daten im Sicherheitsspeicher gelöscht sind und die Aufzeichnung der Sensordaten bzw. die Übertragung der Sensordaten von dem Zwischenspeicher in den Endspeicher abgeschlossen ist.

Um sicherzustellen, daß zumindest die wichtigsten und kritischsten Funktionen auch dann durchgeführt werden, wenn aufgrund der ausbleibenden Versorgungsspannung und einer zu geringen Batteriespannung das vorgesehene Verfahren nicht vollständig durchgeführt werden kann, wird nach einem erfolgten Angriff folgende Reihenfolge eingehalten:

Zunächst werden die sicherheitsrelevanten Daten im Sicherheitsspeicher gelöscht. In einem zweiten Schritt werden dann die aktuellen Zustandsdaten, zumindest des Sensors, der den Angriff signalisiert hat, in dem Endspeicher direkt abgelegt. Anschließend werden die im Zwischenspeicher enthaltenen Zustandsdaten in den Endspeicher übertragen. Beim Übertragen der Zustandsdaten vom Zwischenspeicher in den Endspeicher wird eine zeitlich rückwärtige Reihenfolge eingehalten, d.h., es werden zunächst die jüngsten Zustandsdaten in den Endspeicher übertragen und zum Schluß die ältesten Zustandsdaten, damit das Protokoll möglichst aktuell ist.

Wie bereits oben beschrieben, finden derartige Sicherheitsprozessoren einen Hauptanwendungsbereich innerhalb von Chipkarten-Terminals. Selbstverständlich ist die Erfindung aber nicht auf diesen Bereich beschränkt. Das erfindungsgemäße Verfahren bzw. ein entsprechender Sicherheitsprozessor kann überall eingesetzt werden, wo es darum geht, sicherheitsrelevante Daten vor unbefugtem Zugriff zu schützen.

Die Erfindung wird im folgenden unter Hinweis auf die beigefügten Zeichnungen anhand eines Ausführungsbeispiels näher erläutert. Die dort dargestellten Merkmale können nicht nur in den genannten Kombinationen, sondern auch einzeln oder in anderen Kombinationen erfindungswesentlich sein. Es zeigen:
- Fig. 1: in schematisches Blockschaltbild der funktionellen Anordnung der Sensorauswerteeinrichtung und der Datenaufzeichnungseinrichtung innerhalb des Sicherheitsprozessors,
- Fig. 2: in schematisches Blockschaltbild der Sensorauswerteeinrichtung und der Datenaufzeichnungseinrichtung.

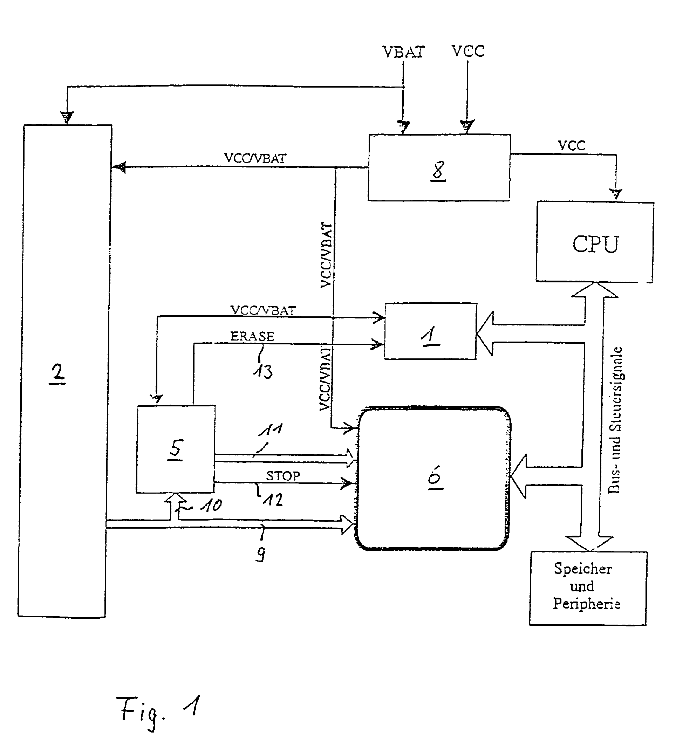

Der in den Figuren dargestellte erfindungsgemäße Sicherheitsprozessor weist mehrere Sicherheitssensoren 2 auf. Die verschiedenen Sensoren 2 sind in Fig. 1 als ein gemeinsamer Block dargestellt. Es kann sich hierbei um unterschiedlichste Sensortypen handeln, beispielsweise um Lichtsensoren, Thermosensoren oder um Sensoren, die auf mechanische Verformungen oder Erschütterungen reagieren.

Die Signale dieser Sensoren 2 werden unverändert, das heißt, in analoger Form, einerseits über die Leitungen 9 an die Datenaufzeichnungseinrichtung 6 und andererseits über die Abzweigung 10 an die Sensorauswerteeinrichtung 5 weitergeleitet.

Die Datenaufzeichnungseinrichtung bzw. -schaltung 6 weist an ihrem einen Eingang, auf den über die Leitung 9 die analogen Sensorsignale übermittelt werden, einen Analog/ Digital-Wandler 7 auf, der die Sensorsignale digitalisiert. Diese digitalen Sensorsignale werden dann an einen oft überschreibbaren, flüchtigen Zwischenspeicher 3 weitergeleitet und dort zyklisch abgespeichert. Das heißt, es wird zunächst der erste Sensordatensatz, dann der zweite Sensordatensatz usw. abgespeichert, bis der Zwischenspeicher 3 mit n Sensordatensätzen vollständig belegt ist. Mit dem n+1 Datensatz wird dann wiederum der älteste Datensatz, das heißt, der Sensordatensatz 1, überschrieben. Auf diese Weise werden immer die letzten n Datensätze abgespeichert, so daß zu jedem Zeitpunkt ein Protokoll über einen bestimmten, zeitlich zurückliegenden Zeitraum vorliegt.

Gleichzeitig werden die Sensorsignale innerhalb der Sensorauswerteeinrichtung bzw. -schaltung 5 dahingehend ausgewertet, ob eines der Sensorsignale einen vorgegebenen Schwellenwert unterschreitet oder überschreitet. Die Schwellenwerte können für die einzelnen Sensoren 2 frei eingestellt werden, um so die Empfindlichkeit der gesamten Sicherheitsschaltung zu verändern.

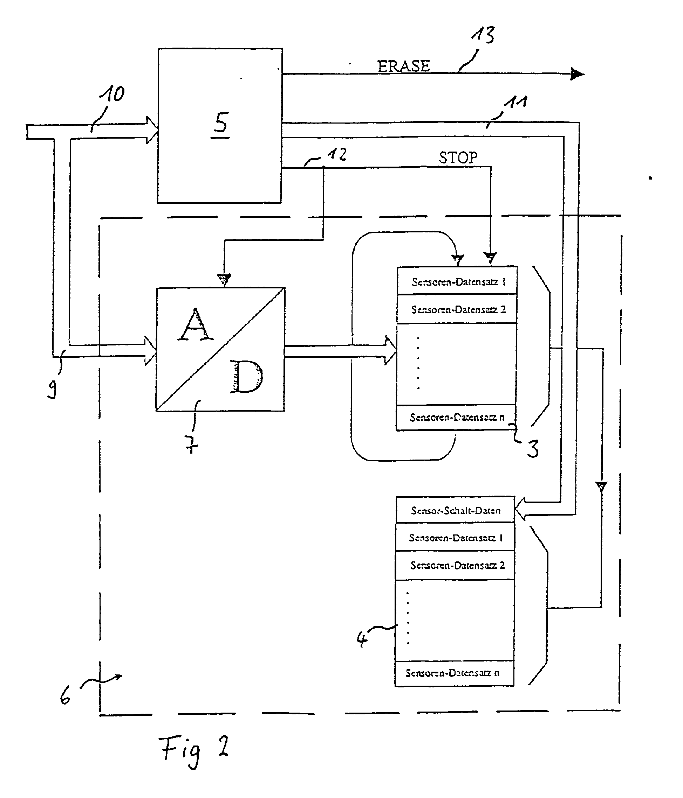

Wird die Überschreitung bzw. Unterschreitung eines Schwellenwerts signalisiert, so wird dieses als ein Angriff auf den Sicherheitsprozessor gesehen. In diesem Fall wird von der Sensorauswerteeinrichtung 5 über die Reset-Leitung 13 der relevante Bereich im Sicherheitsspeicher 1 aktiv gelöscht. Gleichzeitig wird an den Analog/Digital-Wandler 7 und an den Zwischenspeicher 3 über die Leitung 12 ein Stop-Befehl gegeben, mit dem die weitere Digitalisierung der Sensorsignale und deren Abspeicherung im Zwischenspeicher gestoppt wird. Außerdem werden die Sensorsignale über die Leitung 11 zur Datenaufzeichnungseinrichtung 6 weitergeleitet und dort in einen nichtflüchtigen Endspeicher 4 als Sensor-Schalt-Daten direkt eingeschrieben (Fig. 2).

Anschließend wird innerhalb der Datenaufzeichnungseinrichtung 6 automatisch der Inhalt des Zwischenspeichers 3 in den nichtflüchtigen Endspeicher 4 gespiegelt, d.h. kopiert. Dieser Kopiervorgang erfolgt bezüglich des Alters der Datensätze zeitlich rückwärts. Das heißt, es wird zuerst von allen Sensoren 2 das letzte Byte, dann das vorletzte Byte usw. aufgezeichnet. Hierbei werden die Daten des Sensors zuerst übertragen, der den Angriff signalisiert hat.

Bei einer erneuten Inbetriebnahme des Sicherheitsprozessors nach einem Angriff kann dann die CPU des Sicherheitsprozessors über den internen Bus den Endspeicher 4 auslesen und so die gewünschte Information herausfiltern.

Vor dem nächsten Einsatz, d. h. dem erneuten Scharfstellen der Sensoren 2, wird dann nach dem Auslesen der Endspeicher 4 wieder gelöscht, damit im Falle eines neuen Angriffs nur die aktuellen Sensorzustände darin enthalten sind.

Um im Falle eines Angriffs bei unterbrochener Versorgungsspannung den Ablauf der Sicherheitsfunktionen zu gewährleisten, wird der Sicherheitsprozessor neben der Versorgungsspannung VCC mit einer Batteriespannung VBAT versorgt. Hierzu wird sowohl die Versorgungsspannung VCC als auch die Batteriespannung VBAT an eine Spannungsauswahleinrichtung bzw. -schaltung 8 des Sicherheitsprozessors angelegt. Diese Spannungsauswahleinrichtung 8 überwacht ständig die Versorgungsspannung VCC und sorgt dafür, daß beim Abfall der Versorgungsspannung VCC unter einen Minimalwert automatisch die maßgeblichen Bauelemente mit der Batteriespannung VBAT weiter versorgt werden. Die Sensoren 2 können zum Teil auch direkt permanent mit Batteriespannung VBAT versorgt werden.

Durch die oben genannte spezielle Reihenfolge der einzelnen Funktionsschritte ist dafür gesorgt, daß auch bei einem Zusammenbruch der Batteriespannung VBAT, d. h. wenn die Batteriespannung VBAT unter einen Minimalwert abfällt, mit großer Wahrscheinlichkeit zumindest die Löschung der sicherheitsrelevanten Daten gewährleistet ist und außerdem die Informationen entsprechend ihrer Wichtigkeit für die spätere Auswertung bevorzugt erhalten bleiben.

## Patentansprüche

1. Verfahren zur Sicherung eines Sicherheitsdatenspeichers (1), bei dem eine äußere Einwirkung auf ein Bauteil, welches den Sicherheitsdatenspeicher (1) enthält, von Sensoren (2) detektiert wird, wobei durch Unter- oder Überschreiten eines Schwellenwerts an einem der Sensoren (2) ein Angriff signalisiert wird, aufgrund dessen der Inhalt des Sicherheitsdatenspeichers (1) zumindest teilweise gelöscht wird, wobei der Zustand der Sensoren (2) permanent überwacht wird und die Signale, als Sensordatensätze in einem flüchtigen Zwischenspeicher (3) zyklisch abgelegt werden, so dass zu jedem Zeitpunkt Sensordatensätze über einen bestimmten, zeitlich zurückliegenden Zeitraum vorliegen, und wobei bei Signalisieren eines Angriffs die im Zwischenspeicher (3) enthaltenen Sensordatensätze in einen nichtflüchtigen Endspeicher (4) übertragen werden.

2. Verfahren nach einem der Anspruch 1, **dadurch gekennzeichnet, daß** bei einem Zusammenbruch der Versorgungsspannung (VCC) die Spannungsversorgung der Sensoren (2) und/ oder des Sicherheitsdatenspeichers (1) und/oder weiterer zur Durchführung des Verfahrens benötigter Bauelemente (3,4,5,6,7) eine bestimmte Zeitspanne mit einer Batterie aufrecht erhalten wird.

## Claims

1. A method for protecting a secure data memory (1) wherein an external action on a component containing the secure data memory (1) is detected by sensors (2), wherein undershooting or overshooting of a threshold on one of the sensors (2) signals an attack due to which the content of the secure data memory (1) is at least partly erased, wherein the status of the sensors (2) is permanently monitored and the signals of the sensors are stored cyclically in sensor data records in a volatile intermediate memory (3), so that sensor data records for a certain, previous time period are present at any point in time, and wherein upon signaling of an attack the sensor data records contained in the intermediate memory (3) are transferred to a non-volatile final memory (4).

2. The method according to claim 1, **characterized in that** upon a breakdown of the supply voltage (VCC) the power supply to the sensors (2) and/or to the secure data memory (1) and/or to further components (3, 4, 5, 6, 7) required for carrying out the method is maintained with a battery for a determined time span.

## Revendications

1. Procédé de sécurisation d'une mémoire de données de sécurité (1), dans lequel une action extérieure exercée sur un composant contenant la mémoire de données de sécurité (1) est détectée par des senseurs (2), une chute en dessous ou une montée au dessus d'une valeur seuil au niveau d'un des senseurs (2) signalant une attaque en raison de laquelle le contenu de la mémoire de données de sécurité (1) est effacé au moins en partie, l'état des senseurs (2) étant surveillé en permanence et les signaux des senseurs étant déposés cycliquement dans une mémoire tampon volatile (3) en tant que jeux de données de senseurs, de telle sorte que des jeux de données de senseurs se rapportant à un laps de temps déterminé déjà révolu sont à tout moment disponibles, et les jeux de données de senseurs contenus dans la mémoire tampon (3) étant, lors du signalement d'une attaque, transférés dans une mémoire terminale (4) non volatile.

2. Procédé selon la revendication 1, **caractérisé en ce que**, lors d'une rupture de la tension d'alimentation (VCC), l'alimentation électrique des senseurs (2) et / ou de la mémoire de données de sécurité (1) et / ou d'autres composants (3, 4, 5, 6, 7) nécessaires à l'exécution du processus est maintenue durant un laps de temps déterminé au moyen d'une pile.
